# EUROPÄISCHE PATENTANMELDUNG

(11) **EP 1 995 127 A2**
(43) Veröffentlichungstag der Anmeldung: **26.11.2008**
(21) Anmeldenummer: 08075688.5
(22) Anmeldetag: 07.06.2006
(51) Int. Cl.: B60R 21/217, B60R 21/276, B60R 21/239

(54) **Airbagmodul**

(30) Priorität: 10.06.2005 DE 102005027910; 15.12.2005 DE 202005020687 U
(62) Teilanmeldung aus: 06742408.5
(71) Anmelder: Takata-Petri AG, 63743 Aschaffenburg (DE)
(72) Erfinder: Lube, Thomas, D-12589 Berlin (DE); Meissner, Dirk, D-13467 Berlin (DE); Hofmann,Heiko, D-13086 Berlin (DE); Winkler, Andreas, D-85049 Ingolstadt (DE)
(74) Vertreter: Gross, Felix

(57) **Zusammenfassung**

Airbagmodul für ein Kraftfahrzeug mit einer Abdeckung (7), zur Aufnahme eines Gassackes (1), die einen Außenraum (A) des Airbagmoduls (6) von einem Innenraum (1) des Airbagmoduls (6) trennt, einem Gassack (1), der zum Schutz eines Insassen durch eine Einblasöffnung (3) hindurch mit Gas aufblasbar ist, einem Gasgenerator (8), mit dem das Gas zum Aufblasen des Gassackes (1) erzeugbar ist, das aus mindestens einer Gasaustrittsöffnung des Gasgenerators (8) austritt und durch die Einblasöffnung (3) in den Gassack (1) gelangt, einer den Gasgenerator (8) umgebenden Kammer (9), die eine zylindrische Wandung (15) aufweist, einer verschließbaren Ausströmöffnung (29) der Kammer (9), die an einem dem Gassack (1) zugewandten Ausströmbereich (31) der Kammer (9) angeordnet ist und durch die Gas zum Aufblasen des Gassackes (1) in den Gassack (1) gelangen kann, einer in der Wandung (15) angeordneten ersten Abströmöffnung (15a), der ein zumindest zwischen zwei unterschiedlichen Positionen bewegbares Element (16) zugeordnet ist, durch dessen Bewegung zwischen den beiden Positionen die erste Abströmöffnung (15a) derart gasleitend mit der Gasaustrittsöffnung des Gasgenerators (8) verbindbar ist, dass das durch die Gasaustrittsöffnung ausströmende Gas zumindest teilweise in den Außenraum (A) geleitet wird, wobei das bewegbare Element eine Ventilplatte (32) mit einer Öffnung (32a) aufweist, wobei die Ventilplatte (32), derart verschiebbar an der Wandung (15) der Kammer (9) angeordnet ist, dass die Öffnung (32a) durch ein Verschieben der Ventilplatte (32) entlang des Ausströmbereiches (31) mit der Ausströmöffnung (29) in Deckung bringbar ist. Erfindungsgemäß ist vorgesehen, dass die Ventilplatte (32) zum in Deckung bringen der Öffnung (32a) mit der Ausströmöffnung (29) um eine senkrecht auf der Ventilplatte (32) stehende Achse rotierbar ist.

## Beschreibung

Die Erfindung betrifft ein Airbagmodul für ein Kraftfahrzeug gemäß dem Oberbegriff des Anspruchs 1.

Ein solches Airbagmodul umfasst zumindest eine Abdeckung, zur Aufnahme eines Gassackes, wobei die Abdeckung einen Außenraum des Airbagmoduls von einem Innenraum des Airbagmoduls trennt, einen Gassack, der zum Schutz eines Insassen durch eine Einblasöffnung mit Gas aufblasbar ist. Weiterhin umfasst ein derartiges Airbagmodul einen Gasgenerator, mit dem das Gas zum Aufblasen des Gassackes erzeugbar ist, wobei dieses aus mindestens einer Gasaustrittsöffnung des Gasgenerators austritt und durch die Einblasöffnung in den Gassack gelangt, sowie eine erste Abströmöffnung, die derart gasleitend mit der Gasaustrittsöffnung des Gasgenerators verbindbar ist, dass das durch die Gasaustrittsöffnung ausströmende Gas zumindest teilweise in den Außenraum geleitet wird, wobei der ersten Abströmöffnung ein zumindest zwischen zwei unterschiedlichen Positionen bewegbares Element zugeordnet ist, durch dessen Bewegung zwischen den beiden Positionen die erste Abströmöffnung derart gasleitend mit der Gasaustrittsöffnung des Gasgenerators verbindbar ist, dass das durch die Gasaustrittsöffnung ausströmende Gas zumindest teilweise in den Außenraum geleitet wird.

Weiterhin weist das besagte Airbagmodul eine Kammer auf, die den Gasgenerator des Airbagmoduls umgibt. Die Kammer dient einerseits zum Schutz des Gassackes und kann andererseits öffenbare (verschließbare) Abströmöffnungen (zum Einleiten von Gas in den Außenraum) bzw. Ausströmöffnung (zum Einleiten von Gas in den Gassack) aufweisen oder durch Bewegungen von Bestandteilen der Kammer derartige Abströmöffnungen ausbilden. Die Kammer des Gasgenerators weist des Weiteren eine zylindrische Wandung auf, an der die erste Abströmöffnung ausgebildet ist.

Die den Gasgenerator umgebende Kammer weist ferner eine verschließbare Ausströmöffnung auf, durch die durch den Gasgenerator erzeugtes bzw. freigesetztes Gas zum Aufblasen des Gassackes in den Gassack gelangen kann. Bevorzugt ist die Ausströmöffnung (es kann sich hierbei auch um eine Mehrzahl von Ausströmöffnungen handeln) an einem der Einblasöffnung des Gassackes zugewandten Ausströmbereich der Kammer angeordnet.

Weiterhin weist das bewegbare Element des Airbagmoduls eine Ventilplatte mit einer Öffnung auf, wobei die Ventilplatte derart beweglich an der Wandung der Kammer gelagert ist, dass die Öffnung durch ein Verschieben (Rotieren) der Ventilplatte entlang des Ausströmbereiches, das heiß7t entlang einer Ebene in der die Öffnung liegt, mit der Ausströmöffnung in Deckung bringbar ist. Bei einer Mehrzahl von an dem Ausströmbereich ausgebildeten Ausströmöffnungen ist an der Ventilplatte eine entsprechende Mehrzahl an Öffnungen vorgesehen, die mit den Ausströmöffnungen durch Verschieben bzw. Verdrehen der Ventilplatte in Deckung bringbar sind, wodurch die Ausströmöffnungen der Kammer geöffnet werden können.

Der Erfindung liegt das Problem zugrunde, das Aufblasverhalten eines Airbagmoduls der eingangs genannten Art zu verbessern.

Dieses Problem wird durch ein Airbagmodul mit den Merkmalen des Anspruchs 1 gelöst.

Danach kann die Ventilplatte um eine senkrecht auf der Ventilplatte stehende Achse, die mit einer Hauptentfaltungsrichtung des Gassackes zusammenfällt, rotiert werden, wobei die Öffnungen der Ventilplatte mit den Ausströmöffnungen des Ausströmbereiches zur Deckung gebracht werden können.

Dabei ist die Öffnung bzw. sind die Öffnungen vorzugsweise derart an der Ventilplatte ausgebildet, dass die Ventilplatte durch Verdrehen der Ventilplatte bezüglich des Abströmbereiches um einen vorbestimmbaren Winkel sämtliche Ausströmöffnungen des Ausströmbereiches der Kammer verschließt.

Hierdurch kann das Aufblasverhalten des Airbagmoduls vorteilhaft an spezifische Situationen angepasst werden. So kann beispielsweise bei einer oop-Situation (out-ofposition-Situation), d.h., eine durch den Gassack zu schützende Person ist z.B. entlang einer Hauptentfaltungsrichtung des Gassackes nicht ausreichend vom Gassack beabstandet, frühzeitig die erste Abströmöffnung (oder eine Mehrzahl solcher Abströmöffnungen) geöffnet werden, so dass der Gassack, dem geringeren Abstand zwischen Person und Gassack entsprechend, weniger stark aufgeblasen wird, um die Person nicht zu verletzen.

Vorzugsweise ist der Gassack durch einen öffenbaren Bereich der Abdeckung in den Außenraum des Moduls entfaltbar und das Airbagmodul weist vorzugsweise eine zweite Abströmöffnung auf, die in einem aufgeblasenen Zustand des Gassackes derart im Innenraum des Airbagmoduls angeordnet ist, dass aus der zweiten Abströmöffnung austretendes Gas durch den geöffneten öffenbaren Bereich hindurch in den Außenraum gelangt.

Der öffenbare Bereich der Abdeckung kann beispielsweise durch den Gassack geöffnet werden, indem dieser beim Entfalten entlang einer Hauptentfaltungsrichtung des Gassackes gegen den öffenbaren Bereich drückt. An der Abdeckung können Aufreißlinien vorgesehen sein, entlang derer der öffenbare Bereich der Abdeckung aufreißen kann.

Mittels der ersten Abströmöffnung wird die durch die zweite Abströmöffnung (oder einer Mehrzahl solcher Öffnungen) bewirkte Reduktion eines in dem Gassack sich beim Aufblasen aufbauenden Gasdruckes vorteilhaft unterstützt. Die Anordnung derartiger (permanent offener) zweiter Abströmöffnungen im Innenraum des Airbagmoduls ermöglicht auf Grund des beim Aufblasen hohen Innendrucks im Airbagmodul ein gutes Ventilieren des Gassackes.

Auf Grund der Anpassung der Rückhalteperformance eines solchen Airbagmoduls mittels des Zeitpunktes eines Öffnens der ersten Abströmöffnung (dieser Zeitpunkt stellt einen einfach kontrollierbaren Parameter einer zum Steuern der ersten Abströmöffnung verwendeten Software dar), kann ein derartiges Airbagmodul fahrzeugflottenübergreifend auf einfachste Weise angepasst und eingesetzt werden. Dies gilt auch für eine wechselnde Motorisierung im jeweiligen Fahrzeug und für die Anpassung an unterschiedliche gesetzliche Vorgaben und Verbrauchertests.

Vorzugsweise ist die Gasaustrittsöffnung des Gasgenerators derart mit der ersten Abströmöffnung gasleitend verbindbar, dass das durch die Gasaustrittsöffnung ausströmende Gas vollständig in den das Airbagmodul umgebenden Außenraum geleitet wird. Somit kann ein Aufblasen des Gassackes, beispielsweise im Falle eine oop-Situation vollständig unterbunden werden.

In einer Ausführungsform der Erfindung ist vorgesehen, dass die erste Abströmöffnung derart im innenraum des Airbagmoduls angeordnet ist, dass das Gas durch den öffenbaren Bereich hindurch in den Außenraum gelangt. Eine Verletzungsgefahr für eine Person besteht hierbei nicht, da der öffenbare Bereich durch den sich entfaltenden Gassack abgedeckt wird. Zusätzlich besteht beispielsweise bei einem Fahrerairbag Designfreiheit bezüglich einer dem Fahrer abgewandeten Seite der Lenksäule bzw. des Lenkrades, da diese bei einem Abströmen von Gas durch einen in Richtung eines Fahrers geöffneten öffenbaren Bereich einer Abdeckung des Airbagmoduls nicht strömungsoptimiert bzw. hitzebeständig aufgebaut werden muss.

In einer weiteren Variante der Erfindung weist der Gassack zum Ablassen von Gas eine dritte Abströmöffnung auf, die bei einem entfalteten Gassack im Außenraum des Airbagmoduls angeordnet ist. Derartige dritte Abströmöffnungen sind vorteilhaft, da sie ein zuverlässiges Entlüften des stehenden, d.h., bereits entfalteten Gassackes, ermöglichen.

Vorzugsweise ist die dritte Abströmöffnung im aufgeblasenen Zustand des Gassackes an einer dem Airbagmodul zugewandten Seite, d.h. einer dem Fahrer abgewandten Seite des Gassackes, angeordnet, so dass die aus dem Gassack strömenden Gase nicht direkt bzw. unverwirbelt auf den Fahrer oder eine durch den Gassack zu schützende Person gerichtet sind.

Bevorzugt ist eine weitere dritte Abströmöffnung vorgesehen, die zum Ablassen von Gas dient und bei einem entfalteten Gassack im Außenraum des Airbagmoduls angeordnet ist. Hierbei liegt die weitere dritte Abströmöffnung vorzugsweise im aufgeblasenen Zustand des Gassackes quer zur Hauptentfaltungsrichtung des Gassackes der dritten Abströmöffnung gegenüber, so dass beispielsweise bei einem symmetrisch aufgebauten Fahrerairbag ein möglichst symmetrisches Gasabströmverhalten bewirkt wird und der Gassack (räumlich) gleichmäßig entlüftet werden kann.

Bevorzugt ist das bewegbare Element derart beweglich im Airbagmodul gelagert, dass es in einer parallel zur Hauptentfaltungsrichtung des Gassackes verlaufenden Bewegungsrichtung verschiebbar ist.

Weiterhin ist bevorzugt das bewegbare Element derart ausgebildet, dass es in einer parallel zur Einblasöffnung verlaufenden Bewegungsrichtung verschiebbar und / oder drehbar ist.

In einer Abwandlung der Erfindung wird das bewegbare Element zumindest durch den Gasgenerator gebildet, wobei bevorzugt der Gasgenerator derart an der Kammer festgelegt ist, dass durch eine Bewegung des Gasgenerators entlang der Bewegungsrichtung die erste Abströmöffnung geöffnet wird.

Vorzugsweise ist der Gasgenerator derart ausgebildet, dass die Bewegung des Gasgenerators entlang der Bewegungsrichtung durch einen beim Ausströmen von Gasen erzeugten Druck bewirkt wird.

Bevorzugt wird die den Gasgenerator umgebende Kammer zumindest durch ein erstes und ein zweites Kammerelement gebildet, wobei eines der beiden Kammerelemente mit dem Gasgenerator verbunden ist, und wobei die beiden Kammerelemente eine Aufnahme für den Gasgenerator bilden und entlang der Bewegungsrichtung beweglich zueinander gelagert sind, so dass sie entlang der Bewegungsrichtung des Gasgenerators voneinander weg bewegt werden können, wodurch die erste Abströmöffnung beispielsweise in Form eines den Gasgenerator umlaufenden Spaltes an der Kammer, d.h., zwischen zwei einander entlang der Bewegungsrichtung zugewandten umlaufenden Rändern der beiden Kammerelemente, ausgebildet wird.

Vorzugsweise sind die beiden Kammerelemente über entlang der Bewegungsrichtung längs erstreckt verlaufende Führungselemente beweglich zueinander gelagert. Derartige Führungselemente können beispielsweise einstückig mit einem der beiden Kammerelemente verbunden sein und entlang der Bewegungsrichtung von diesem Kammerelement oder einer weiteren Komponente der Kammer abstehen. Das andere Kammerelement kann dann über Ausnehmungen (z.B. durchgängige Löcher) verfügen, in die diese Führungselemente eingreifen, so dass dieses andere Kammerelement entlang der Bewegungsrichtung beweglich auf den Führungselementen gelagert ist, d.h., die Führungselemente gleiten durch die Ausnehmungen.

In einer Abwandlung der Erfindung ist vorgesehen, dass der Gassack an dem ersten Kammerelement festgelegt ist, während der Gasgenerator an dem zweiten Kammerelement festgelegt ist. Bei einem Fahrerairbag ist das erste Kammerelement, an dem der Gassack befestigt ist, entlang der Hauptentfaltungsrichtung des Gassackes zwischen dem zweiten Kammerelement und einem durch den Gassack zu schützenden Fahrer angeordnet.

Besonders bevorzugt ist der Gasgenerator derart an dem zweiten Kammerelement befestigt, dass dieses durch eine Bewegung des Gasgenerators entlang der Bewegungsrichtung des Gasgenerators vom ersten Kammerelement beabstandet wird, wobei sich entlang der Bewegungsrichtung zwischen den beiden Kammerelementen die erste Abströmöffnung, beispielsweise in Form eines den Gasgenerator quer zur Bewegungsrichtung umlaufenden Spaltes, ausbildet. D.h., die erste Abströmöffnung wird durch dieses Auseinanderbewegen der beiden Kammerelemente geöffnet.

In einer Abwandlung der Erfindung ist ein lösbares Verriegelungselement vorgesehen, das zum Festlegen des Gasgenerators bezüglich der Einblasöffnung dient. Dieses kann beim Aufblasen des Gassackes den Gasgenerator in seiner anfänglichen Position fixieren und ist durch eine Steuerelektronik ansteuerbar, so dass abhängig von einer spezifischen Unfallsituation zu einem bestimmten Zeitpunkt eine Entriegelung des Verriegelungselementes erfolgen kann. Der Gasgenerator, der aufgrund des beim Ausströmen von Gas entstehenden Druckes gegen das Verriegelungselement drückt, bewegt sich nach einem Lösen oder Entriegeln des Verriegelungselementes, dem Druck folgend, entlang der Bewegungsrichtung von der Einblasöffnung des Gassackes weg in eine weitere Position, die entlang der Bewegungsrichtung von der anfänglichen Position beabstandet ist.

Vorzugsweise ist das Verriegelungselement derart ausgebildet, dass es zum Festlegen des Gasgenerators bezüglich der Einblasöffnung des Gassackes mit den Führungselementen in Eingriff bringbar ist (das Verriegelungselement kann beispielsweise formschlüssig an den Führungselementen einrasten).

Besonders bevorzugt ist das Verriegelungselement dazu eingerichtet und vorgesehen durch eine lineare Bewegung entlang einer quer zur Bewegungsrichtung des Gasgenerators verlaufenden Entriegelungsrichtung zumindest teilweise außer Eingriff mit den Führungselementen gebracht zu werden. Vorzugsweise weist das Verriegelungselement hierbei entlang der Entriegelungsrichtung längs erstreckte, das Entriegelungselement entlang der Bewegungsrichtung durchstoßende Langlöcher auf, an denen die Führungselemente zum Festlegen des Gasgenerators einrasten. Hierzu können diese Langiöcher sich entlang der Entriegelungsrichtung aufweiten, wobei die Führungselemente entlang der Bewegungsrichtung in einen aufgeweiteten Bereich dieser Langlöcher einführbar sind und Einkerbungen aufweisen, in die das Verriegelungselement, und zwar mit Randbereichen, die die Langlöcher an ihren jeweiligen schmalen Bereichen beranden, derart eingreifen kann, dass die Führungselemente entlang der Bewegungsrichtung gegen diesen Randbereiche drücken und daher entlang der Bewegungsrichtung festgelegt sind.

Ein schmaler und ein entlang der Entriegelungsrichtung gegenüberliegender aufgeweiteter Bereich eines Langloches können durch eine Engstelle oder Verengung des Langloches quer zur Entriegelungsrichtung voneinander abgeteilt sein. Dies ist vorteilhaft, da hierdurch ein Führungselement mit seiner ringförmig umlaufenden Einkerbung in den schmalen Bereich einpressbar ist und dort durch die Engstelle gehalten wird. Ein Verschieben eines in einem schmalen Bereich befindlichen Führungselementes entlang der Entriegelungsrichtung in einen aufgeweiteten Bereich eines Langloches setzt somit eine vordefinierbare Mindestkraft voraus und vermindert die Gefahr eines unbeabsichtigten Entriegelns des Verriegelungselementes.

In einer Abwandlung der Erfindung ist eine Bewegungserzeugungsvorrichtung vorgesehen, die die lineare Bewegung des Verriegelungselementes zum Lösen des Verriegelungselementes erzeugt. Hierbei weist diese Bewegungserzeugungsvorrichtung bevorzugt einen Kolben auf, der entlang der Entriegelungsrichtung gegen das Verriegelungselement drückt, wobei die Führungselemente aus den schmalen Bereichen der Langlöcher in die aufgeweiteten Bereiche dieser Langlöcher verlagert werden, so dass sie quer zur Entriegelungsrichtung, d.h., entlang der Bewegungsrichtung in den Langlöchern gleiten können. An den Verriegelungselementen können entlang der Bewegungsrichtung Verbreiterungen ausgebildet sein, so dass das Verriegelungselement beim Gleiten entlang der Führungselemente nicht völlig außer Eingriff mit den Führungselementen gerät. Es existiert somit ein maximal möglicher Abstand zwischen den beiden Kammerelementen entlang der Bewegungsrichtung.

Die erste Abströmöffnung oder eine Mehrzahl derartiger erster Abströmöffnungen sind erfindungsgemäß an einer den Gasgenerator umgebenen Kammer ausgebildet, wobei der Gasgenerator bezüglich der Einblasöffnung eine feste Position aufweist (mit Ausnahme von Ausgleichsbewegungen die durch eine schwingungsfähige Lagerung des Gasgenerators möglich sind).

Vorzugsweise ist hierbei das bewegbare Element derart beweglich an dieser Kammer gelagert, dass die erste Abströmöffnung mittels des bewegbaren Elementes verschließbar bzw. öffenbar ist.

Die zylindrische Wandung der Kammer kann den Gasgenerator quer zur Hauptentfaltungsrichtung des Gassackes des Airbagmoduls umlaufen. In diesem Fall ist die Gasaustrittsöffnung des Gasgenerators (oder einer Mehrzahl derartiger Gasaustrittsöffnungen) der ersten Abströmöffnung (bzw. einer entsprechenden Mehrzahl derartiger erster Abströmöffnungen) quer zur Hauptentfaltungsrichtung des Gassackes zugewandt, so dass das Gas zunächst quer zur Hauptentfaltungsrichtung aus der den Gasgenerator umgebenden Kammer abströmen kann.

Vorzugsweise weist das bewegbare Element einen zylindrischen Ring mit einer Aussparung auf, wobei der Ring derart verschiebbar an der Wandung der Kammer gelagert ist, dass die Aussparung durch ein Verschieben des Ringes entlang der Wandung mit der ersten Abströmöffnung in Deckung bringbar ist. Hierbei kann die Aussparung des Ringes die Form und Größe der ersten Abströmöffnung aufweisen. Bei einer Mehrzahl von ersten Abströmöffnungen, die entlang der zylindrischen Wandung ausgebildet sein können, weist der zylindrische Ring eine entsprechende Mehrzahl von Aussparungen auf, die durch ein Verschieben des Ringes entlang der Wandung mit diesen ersten Abströmöffnungen in Deckung bringbar sind. Unter einem Verschieben des Ringes wird hierbei eine Rotation eines zylindrischen Ringes um seine Zylinderachse verstanden, d.h., der zylindrische Ring kann an der Wandung anliegen und gegen die Wandung verdreht werden. Allerdings ist eine Translation des Ringes ebenso möglich (auch in Kombination mit einer Rotation).

Die Aussparung (oder die Aussparungen) des Ringes sind derart am Ring ausgebildet, dass der Ring bezüglich der Wandung der Kammer in eine Position dreh- bzw. schiebbar ist, in der der Ring die erste Abströmöffnung (oder die Mehrzahl an ersten Abströmöffnungen) vollständig verschließt. Ebenso können die Aussparungen derart am Ring angeordnet sein, dass in einer bestimmten Position des Ringes bezüglich der Wandung sämtliche erste Abströmöffnungen der Wandung geöffnet sind.

Besonders bevorzugt weist der Ring zum Verschieben des Ringes entlang der Bewegungsrichtung eine Ausnehmung mit einem quer zur Bewegungsrichtung erstreckten Rand auf (bei einer zylindrischen Wandung umläuft die Bewegungsrichtung die zylindrische Wandung bevorzugt quer zur Hauptentfaltungsrichtung des Gassackes, d.h., quer zur Zylinderachse der zylindrischen Wandung). In einer Variante der Erfindung ist diese Ausnehmung als ein den Ring unterbrechender Spalt ausgebildet (offener Ring), der sich quer zur Bewegungsrichtung erstreckt.

Vorzugsweise drückt ein Kolben einer Bewegungserzeugungsvorrichtung entlang der Bewegungsrichtung gegen den Rand der Ausnehmung, so dass der Ring durch den Kolben aus einer anfänglichen Position, in der die erste Abströmöffnung verschlossen ist, in eine weitere Position geschoben wird, in der die erste Abströmöffnung geöffnet ist. Durch diese vorteilhafte tangentiale Krafteinleitung wird der Ring nur gering deformiert. Zur Verstärkung der Ringes kann die Ausnehmung an dem Ring nur partiell ausgebildet sein, d.h., den Ring senkrecht zur Bewegungsrichtung nicht vollständig durchtrennen. In diesem Fall ist weiterhin bevorzugt eine schmale, den Ring quer zur Bewegungsrichtung durchtrennende weitere Ausnehmung vorgesehen, die in der Bewegungsrichtung hinter dem Rand der Ausnehmung ausgebildet ist und entlang dieses Randes, d.h., quer zur Bewegungsrichtung, verläuft. Drückt nun der Kolben der Bewegungserzeugungsvorrichtung entlang der Bewegungsrichtung gegen den Rand der Ausnehmung, so wird der Ring aufgrund der weiteren Ausnehmung nicht entlang der Bewegungsrichtung geschoben, sondern gezogen, was eine weitere Minimierung einer durch die Kolbeneinwirkung verursachten Deformation des Ringes bedingt.

Aufgrund der vorstehenden Minimierung der Deformation des Ringes kann dieser besonders leicht ausgebildet werden (geringe Wandstärke). Weiterhin kann die Aussparung des Ringes, die zum Öffnen der ersten Abströmöffnung mit der ersten Abströmöffnung in Deckung bringbar ist, in Folge der Minimierung der Deformation des Ringes besonders großflächig ausfallen. Die Aussparung (oder die Aussparungen) kann daher etwa die Hälfte einer der Wandung der Kammer zugewandten Fläche des Ringes einnehmen.

In einer Variante der Erfindung ist vorgesehen, dass die Ventilplatte an einem umlaufenden, dem Gassack bzw. der Einblasöffnung des Gassackes zugewandten Rand des Ringes festgelegt ist. D.h., das bewegbare Element kann als ein flacher einseitig offener Zylinder ausgebildet sein, wobei der Ring die Zylinderwandung bildet, und wobei der eine Boden dieses Zylinders durch die (kreisförmige) Ventilplatte gebildet wird.

Vorzugsweise ist die Öffnung der Ventilplatte derart bezüglich der Aussparung des Ringes angeordnet, dass die Ausströmöffnung durch die Ventilplatte verschlossen ist, wenn die erste Abströmöffnung der Wandung der Kammer offen ist, wobei weiterhin vorzugsweise die Ausströmöffnung offen ist, wenn die erste Abströmöffnung durch den Ring verschlossen ist. Entsprechendes gilt für eine Mehrzahl von Öffnungen der Ventilplatte bzw. Ausströmöffnungen der Kammer und eine Mehrzahl von ersten Abströmöffnungen der Kammer bzw. Aussparungen des Ringes.

Die zusätzlich vorgesehenen steuerbaren Ausströmöffnungen der Kammer sind vorteilhaft, da nicht nur ein zusätzlicher Strömungsweg zur Druckentlastung des Gassackes ermöglicht wird, sondern der Weg der Gase in den Gassack vollkommen gesperrt werden kann, so dass eine weiter Verminderung der Insassenbelastung unter oop-Bedingungen möglich ist.

Mit Vorteil können die ersten, zweiten und dritten Abströmöffnungen miteinander kombiniert und aufeinander abgestimmt werden. Hierbei ersetzen die zweiten und dritten Abströmöffnungen im Gassack die Standardabströmöffnungen, mit denen ein Gassack üblicherweise ausgestattet ist. Die Abstimmung der Fläche der zweiten Abströmöffnungen in Bezug auf die dritten Abströmöffnungen, d.h. die Abstimmung des Verhältnisses dieser beiden Flächen zueinander, erfolgt dergestalt, dass die so genannte in-position-performance (der Gassack kann sich frei und ungehindert entfalten) der eines bekannten Standardgassackes entspricht.

Während die zweiten und dritten Abströmöffnungen permanent geöffnet sind, sind die ersten Abströmöffnungen schalt- bzw. steuerbar. D.h., das Öffnen dieser ersten Abströmöffnungen erfolgt zeitabhängig nach Zündung des Gasgenerators (beispielsweise durch eine pyrotechnische Bewegungserzeugungsvorrichtung). Bei einem frühzeitigen Öffnen dieser ersten Abströmöffnungen wird der Massenstrom des Gasgenerators unterhalb einer Gassackanbindung (beispielsweise durch Festklemmen eines die Einblasöffnung des Gassackes umlaufenden Randbereiches an einem Generatorträger) abgeblasen und damit der Füllgrad des Gassackes beeinflusst, wobei gleichzeitig durch zusätzliche zweite und dritte Abströmöffnungen eine effektivere Rückhalteperformance ("weicherer" Gassack) für leichteren Insassen (5 % Frau) erzielt wird. Bei einem späteren Öffnen der schalt- bzw. steuerbaren ersten Abströmöffnungen wird die Rückhalteperformance von schweren Insassen (50 % und 95 % Mann) verbessert. Das Entfalten des Gassackes kann durch eine bessere Rechteckkennung der Beschleunigungswerte (Verzögerung) eines Fahrzeuginsassen bei einer das Airbagmodul auslösenden Unfallsituation unterstützt werden (frühzeitige Rückhaltung durch schneller Gassackbereitstellung). Insgesamt kann durch den gezielt wählbaren Zeitpunkt der Öffnung der zusätzlichen Abströmfläche (erste Abströmöffnungen) eine optimale Dämpfung des Gassackes abhängig vom Insassen eingestellt werden. Die Festlegung des Öffnungszeitpunktes kann anhand einer Insassensensierung (Größe, Gewicht, Position) sowie einer Sensierung crashabhängiger Daten (Verzögerung, Geschwindigkeit) automatisch erfolgen.

Bei oop-Situationen besteht die Möglichkeit, durch sehr frühzeitiges Öffnen der schaltbaren ersten Abströmöffnungen den Druck im Airbagmodul (d.h. im Gassack) zusätzlich zu minimieren, um die auf den Insassen einwirkende Belastung beim Anschießen durch den Gassack weiter zu reduzieren.

Im Gegensatz zu bekannten Airbagmodulen werden die in das Airbagmodul geleiteten Gase nicht durch Öffnungen eines Generatorträgers weiter nach unten, d.h. entlang der Lenkachse in den Lenkradkorpus geleitet, sondern entlang der Lenkachse bzw. der Hauptentfaltungsrichtung des Gassackes in Richtung des öffenbaren Bereiches der Abdeckung des Airbagmoduls umgelenkt. Der Austritt der Gase erfolgt also entlang des Gassackes durch den öffenbaren Bereich der Abdeckung. Da auch bei einer oop-Situation die airbagmodulnahen Körperpartien eines Insassen ausreichend durch den Gassack abgedeckt sind, sind Verletzungen durch die abgeströmten heißen Gase ausgeschlossen. Zusätzlich werden durch den vorstehend beschriebenen Strömungsweg durch den öffenbaren Bereich der Abdeckung keine angrenzenden Baugruppen beeinträchtigt. Zusätzliche Maßnahmen am Lenkrad zur Gewährleistung der Abströmung sind daher nicht notwendig. Gleichzeitig wird verhindert, dass z.B. die Hände am Lenkrad geschädigt werden, wie dies beispielsweise bei einer Abströmung durch das Lenkrad möglich wäre.

Weitere Vorteile und Merkmale der Erfindung werden anhand der nachfolgenden Figurenbeschreibungen von Ausführungsbeispielen deutlich werden.

Es zeigen:
- Fig. 1: eine Draufsicht auf einen ausgebreiteten Gassack mit zweiten und dritten Abströmöffnungen sowie eine Einblasöffnung,
- Fig. 2: eine schematische teilweise geschnittene Ansicht eines Airbagmoduls mit ersten, zweiten und dritten Abströmöffnungen,
- Fig. 3: eine perspektivische Ansicht eines Airbagmoduls mit geschlossenen ersten Abströmöffnungen,
- Fig. 4: eine schematische Schnittansicht des in der Figur 3 gezeigten Airbagmoduls mit geöffneten ersten Abströmöffnungen,
- Fig. 5: eine Explosionsdarstellung des in der Figur 3 bzw. Figur 4 gezeigten Airbagmoduls,
- Fig. 6: eine schematische Ansicht des in der Figur 5 gezeigten Airbagmoduls (in einem zusammengesetzten Zustand),
- Fig. 7: eine pyrotechnische Bewegungserzeugungsvorrichtung mit einem Zünder und einem Kolben,
- Fig. 8: eine perspektivische Explosionsansicht einer Abwandlung des in der Figur 3 bis Figur 6 gezeigten Airbagmoduls,
- Fig. 9: eine perspektivische Ansicht eines weiteren Airbagmoduls mit ersten Abströmöffnungen, die zum Abströmen von Gasen geöffnet sind,
- Fig. 10: eine perspektivische Ansicht des in der Figur 9 gezeigten Airbagmoduls mit geschlossenen ersten Abströmöffnungen,
- Fig. 11: eine perspektivische Explosionsansicht des in der Figur 9 und Figur 10 gezeigten Airbagmoduls,
- Fig. 12: ein weiteres Airbagmodul mit einem beweglich gelagerten Gasgenerator und einer geöffneten ersten Abströmöffnung,
- Fig. 13: eine perspektivische Ansicht des in der Figur 12 gezeigten Airbagmoduls mit einer verschlossenen ersten Abströmöffnung,
- Fig. 14: eine perspektivische Explosionsansicht des in der Figur 12 und Figur 13 gezeigten Airbagmoduls,
- Fig. 15: ein Detail des in der Figur 14 gezeigten Airbagmoduls,
- Fig. 16: eine perspektivische Ansicht einer Kammer mit steuerbaren Ausströmöffnungen, die einen Gasgenerator einer Variante des erfindungsgemäßen Airbagmoduls umgibt,
- Fig. 17: die in der Figur 16 gezeigte Kammer mit geöffneten Ausströmöffnungen,
- Fig. 18: eine perspektivische Explosionsansicht des in der Figur 16 und Figur 17 gezeigten Airbagmoduls.

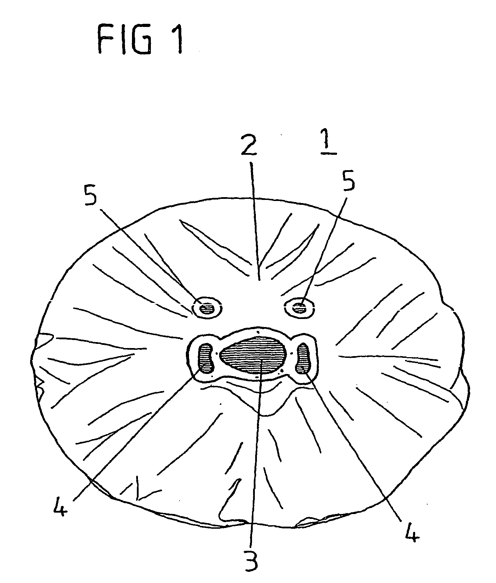

Figur 1 zeigt einen Gassack 1, der für einen Einsatz als ein Fahrergassack (Fahrerairbag) ausgebildet ist. Der Gassack 1 ist entlang einer mit der Papierebene zusammenfallenden Erstreckungsebene ausgebreitet und ist aus zwei kreisrunden Gassacklagen, deren umlaufende Ränder zur Ausbildung des Gassackes miteinander vernäht, verklebt, verwebt oder verschweißt sind.

Der Gassack 1 weist eine Seite 2 auf, die in einem aufgeblasenen Zustand des Gassackes 1 einem in der Figur 1 nicht gezeigten Airbagmodul 6 zugewandt ist, bzw. einem Fahrer, der durch den aufgeblasenen Gassack 1 geschützt werden soll, abgewandt ist.

An der Seite 2 des Gassackes 1 ist mittig eine Einblasöffnung 3 in Form einer kreisrunden Öffnung vorgesehen, durch die Gas zum Aufblasen des Gassackes 1 in den Gassack 1 eingeleitet werden kann.

Der Gassack 1 verfügt über zwei zweite Abströmöffnungen 4, die an zwei einander gegenüber liegenden Randbereichen der Einblasöffnung 3 ausgebildet sind und sich entlang der Einblasöffnung 3 längs erstrecken. Diese zwei zweiten Abströmöffnungen 4 sind derart benachbart zur Einblasöffnung 3 angeordnet, dass sie im aufgeblasenen Zustand des Gassackes 1 in einem Innenraum I des Airbagmoduls 6 angeordnet sind.

Weiterhin weist der Gassack 1 dritte Abströmöffnungen 5 auf, die jeweils zum Zentrum der kreisförmigen Einblasöffnung 3 einen Abstand aufweisen, der größer ist als der Abstand der zweiten Abströmöffnungen 4 zum Zentrum der Einblasöffnung 3, wobei dieser Abstand so groß ausgebildet ist, dass die dritten Abströmöffnungen 5 in einem aufgeblasenen Zustand des Gassackes 1 außerhalb des Innenraumes I des Airbagmoduls 6, und zwar in dem das Airbagmodul umgebenden Außenraum A, angeordnet sind.

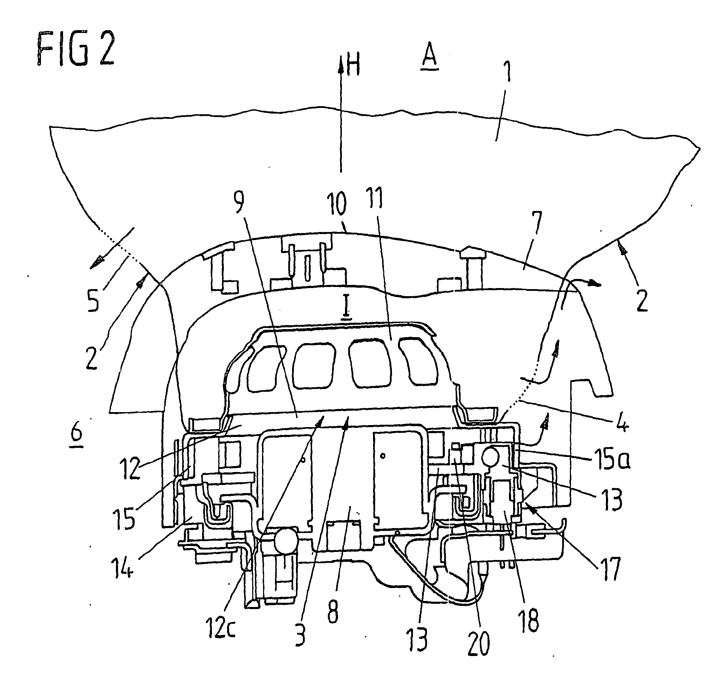

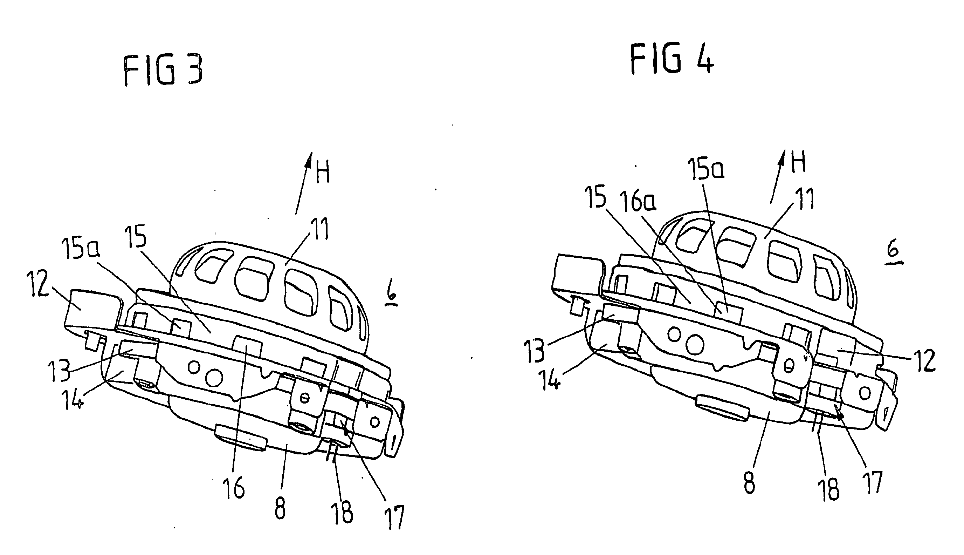

Figur 2 zeigt im Zusammenhang mit Figur 3 bis 7 eine teilweise geschnittene Ansicht des Airbagmoduls 6, welches eine Abdeckung 7 aufweist, die eine Aufnahme für den Gassack 1 des Airbagmoduls 6 sowie für einen Gasgenerator 8 und eine den Gasgenerator 8 umgebende Kammer 9 des Airbagmoduls 6 bildet.

Die Abdeckung 7 des Airbagmoduls 6 trennt den Innenraum I vom Außenraum A des Airbagmoduls 6 ab. An der Abdeckung 7 des Airbagmoduls 6 ist weiterhin ein öffenbarer Bereich 10 vorgesehen, der beispielsweise entlang vordefinierter Aufreißlinien aufreißt, wenn der Gassack 1 in Folge des sich in dem Gassack 1 aufbauenden Gasdruckes entlang einer Hauptentfaltungsrichtung des Gassackes vom Innenraum I her gegen den öffenbaren Bereich 10 der Abdeckung 7 des Airbagmoduls 6 drückt. Unter dem Innenraum I wird dabei der Raum verstanden, den der Gassack 8 in seinem nicht aufgeblasenen Zustand einnimmt. Entlang der Hauptentfaltungsrichtung H des Gassackes 1 wird der Innenraum I durch die ungeöffnete Abdeckung 7 begrenzt.

Figur 2 zeigt das Airbagmodul 6, nachdem sich der Gassack 1 (in Figur 2 ausschnitthaft dargestellt) durch den öffenbaren Bereich 10 der Abdeckung 7 hindurch in den Außenraum A des Airbagmoduls 6 ausgebreitet hat, wobei die dritten Abströmöffnungen 5 des Gassackes 1 im Außenraum A angeordnet sind und die zweiten Abströmöffnungen 4 im Innenraum I des Airbagmoduls 6 angeordnet sind. Der Strömungsweg in der Figur 2 schematisch durch entsprechende Pfeile gekennzeichnet.

Während durch die dritte Abströmöffnung 5 das in dem Gassack 1 befindliche Gas direkt in den Außenraum A strömen kann, wird das Gas durch die zweite Abströmöffnung 4 zuerst in den Innenraum I und von dort entlang des Gassackes 1 durch den öffenbaren Bereich 10 in den Außenraum A eingeleitet.

Die den Gasgenerator 8 umgebende Kammer 9 wird durch einen kappenförmigen Diffusor 11, einen Generatorträger 12, eine Bodenplatte 13 und einen Träger 14 für den daran schwingungsfähig gelagerten Gasgenerator 8 gebildet. Der Diffusor 11 ist kappenförmig ausgebildet und ragt entlang der Hauptentfaltungsrichtung H durch die Einblasöffnung 3 in den (aufgeblasenen) Gassack 1 hinein, wobei ein die Einblasöffnung 3 des Gassackes 1 umlaufender Randbereich entlang der Hauptentfaltungsrichtung H des Gassackes zwischen einem umlaufenden Randbereich 11a des Diffusors 11 und einem umlaufenden Randbereich 12a, der eine zentrale, dem Einblasmund 3 zugewandte Öffnung 12b des Generatorträgers 12 umläuft, angeordnet ist und zwischen diesen beiden entlang der Hauptentfaltungsrichtung H einander zugewandten Randbereichen 11a, 12a eingeklemmt ist (Gassackklemmung).

Der Diffusor 11 und der Generatorträger 12 sind über vier Befestigungselemente 11 b, die längs erstreckt entlang der Hauptentfaltungsrichtung H vom Randbereich 11a des Diffusors 11 abstehen (die vier Befestigungselemente 11 b sind entlang des ringförmigen Randbereiches 11a äquidistant zum jeweiligen nächsten Nachbarn entlang des Randbereiches 11a angeordnet). Diese vier Befestigungselemente 11 b sind durch entsprechende Löcher 12b, die am Randbereich 12a des Generatorträgers 12 ausgebildet sind, geführt, so dass freie Endabschnitte dieser Befestigungselemente 11 b von einer dem Diffusor 11 abgewandten Seite des Randbereiches 12a des Generatorträgers 12 abstehen. Diese abstehenden freien Endabschnitte sind weiterhin in entsprechende (durchgängige) Löcher 13a der Bodenplatte 13 eingeführt, wobei die Löcher 13a in zylinderförmigen Befestigungsbereichen 13b der Bodenplatte 13 ausgebildet sind, die (ebenso wie die Löcher 13a) mit den Befestigungselementen 11 b und der Hauptentfaltungsrichtung H fluchten.

Die Bodenplatte 13 besitzt eine mittige kreisförmige Gasgeneratoraussparung 13c, die entlang der Hauptentfaltungsrichtung H der zentralen Öffnung 12c des Generatorträgers 12 und der Einblasöffnung 3 des Gassackes 1 gegenüber liegt.

In diese Gasgeneratoraussparung 13c der Bodenplatte 13 ist der im Wesentlichen zylinderförmig ausgebildete Gasgenerator 8 entlang der Hauptentfaltungsrichtung H eingeführt. Der Gasgenerator 8 ist über einen von dem Gasgenerator 8 quer zur Hauptentfaltungsrichtung H abstehenden Flansch 8a, der den Gasgenerator 8 quer zur Hauptentfaltungsrichtung H umläuft, schwingungsfähig mit einem wannenförmig ausgebildeten Träger 14 verbunden. Eine schwingungsfähige Anbindung des Gasgenerators 8 über den Flansch 8a an den Träger 14 ist nicht zwingend notwendig. Weiterhin kann der Flansch 8a selbst als Träger 14 ausgeformt werden, so dass Träger 14 und Gasgenerator 8 direkt miteinander verbunden sind.

Der Träger 14 ist an freien Enden der Endabschnitte der Befestigungsmittel 11 b, die durch die Löcher 13a der Bodenplatte 13 geführt sind, festgelegt und verschließt die Kammer 9 des Gasgenerators 8 an einer dem Diffusor 11 entlang der Hauptentfaltungsrichtung H gegenüber liegenden Seite.

Der Generatorträger 12 weist weiterhin eine senkrecht zur zentralen Öffnung 12c des Generatorträgers 12 orientierte zylindrische Wandung 15 auf, die die zentrale Öffnung 12c des Generatorträgers 12 quer zur Hauptentfaltungsrichtung H ringförmig umläuft. An dieser Wandung 15 des Generatorträgers 12 sind eine Mehrzahl von ersten Abströmöffnungen 15a ausgebildet, die mittels eines bewegbaren Elementes in Form eines zylindrischen Ringes 16 verschließbar bzw. öffenbar sind.

Hierzu ist der zylindrische Ring 16 derart ausgebildet, dass er an einer dem Gasgenerator 8 zugewandten Innenseite der zylindrischen Wandung 15 anliegt und entlang einer quer zur Hauptentfaltungsrichtung H verlaufenden Bewegungsrichtung B, die die zylindrische Wandung 15 quer zur Hauptentfaltungsrichtung H umläuft, zwischen zwei Positionen verschiebbar ist, d.h., der zylindrische Ring 16 kann um seine mit der Hauptentfaltungsrichtung H zusammenfallenden Zylinderachse gedreht werden.

An dem Ring 16 sind Aussparungen 16a von der Gestalt der ersten Abströmöffnungen 15a der Wandung 15 vorgesehen, die derart entlang des zylindrischen Ringes 16 angeordnet sind, dass sie vollständig in Deckung mit den ersten Abströmöffnungen 15a der Wandung 15 bringbar sind. Im Falle zur Deckung gebrachter erster Abströmöffnungen 15a bzw. Aussparungen 16a sind die ersten Abströmöffnungen 15a vollständig geöffnet, so dass durch den Gasgenerator 8 bereitgestellte Gase durch die ersten Abströmöffnungen 15a in den Innenraum I und von dort in den Außenraum A des Airbagmoduls 6 gelangen können. Durch Drehen bzw. Verschieben des Ringes 16 können die Aussparungen 16a des Ringes 16 außer Deckung mit den ersten Abströmöffnungen 15a der Wandung 15 des Generatorträgers 12 gebracht werden. In diesem Fall sind die ersten Abströmöffnungen 15a vollständig durch den Ring 16 verschlossen.

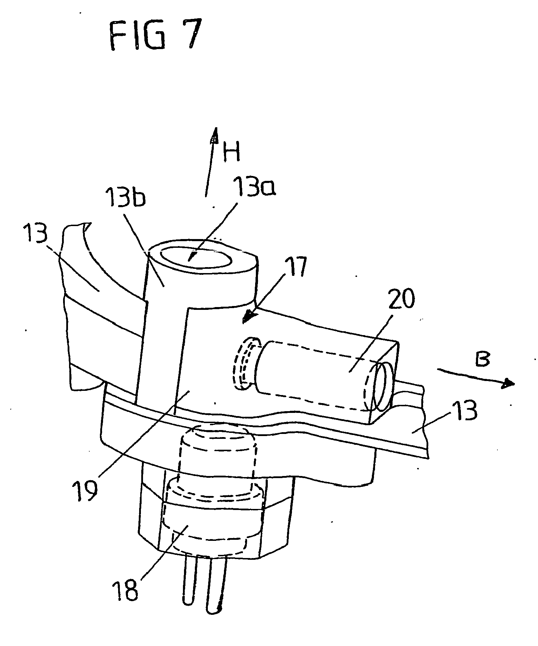

Damit der zylindrische Ring 16 zum Öffnen der anfangs geschlossenen ersten Abströmöffnungen 15a entlang der Bewegungsrichtung B verschoben werden kann, ist an der Bodenplatte 13 eine Bewegungserzeugungsvorrichtung 17 gemäß Figur 7 in Form eines pyrotechnischen Aktuators vorgesehen.

Die Bewegungserzeugungsvorrichtung 17 weist gemäß Figur 7 einen Zünder 18 auf, der mittels einer Steuerelektronik ansteuerbar, d.h., zündbar ist und in einer Druckkammer 19, die in der Bodenplatte 13 ausgebildet ist, einen Überdruck erzeugen kann, der einen beweglich in der Druckkammer 19 gelagerten, längs erstreckten Kolben 20 entlang der Bewegungsrichtung B aus der Druckkammer 19 herausdrücken kann.

Zur Übertragung der Kolbenbewegung ist der Kolben 20 entlang der Bewegungsrichtung B in einer Ausnehmung 21 des Ringes 16 angeordnet, die den Ring 16 entlang der Bewegungsrichtung B unterbricht, wobei der Kolben 20 derart angeordnet ist, dass er durch einen in der Druckkammer 19 bereitgestellten Überdruck entlang der Bewegungsrichtung B gegen einen quer zur Bewegungsrichtung B verlaufenden Rand 22 der Ausnehmung 21 des Ringes 16 drückt, so dass dieser zum Öffnen der ersten Abströmöffnungen 15a entlang der Bewegungsrichtung B gegenüber der Wandung 15 gedreht wird. Bei der Ausnehmung 21 kann es sich auch um eine Aussparung 16a des Ringes 16 handeln.

Vorteilhaft bezüglich der Anordnung des Kolbens 20 in der Ausnehmung 21 des Ringes 16 ist, dass der Kolben 20 entlang der Bewegungsrichtung B zwischen dem dem Kolben 20 zugewandten Rand 22 der Ausnehmung 21 und einem dem Rand 22 entlang der Bewegungsrichtung B gegenüber liegenden weiteren Rand der Ausnehmung 21 angeordnet ist, und zwar derart, dass er tangential zum Ring 16 gegen den ihm zugewandten Rand 22 des Ringes 16 drücken kann. Hierdurch werden Verformungen gemindert, die auftreten können, wenn ein derartiger Kolben 20 radial beabstandet zum Ring 16 gegen einen vom Ring abstehenden Bereich zum Verdrehen des Ringes gegenüber der Wandung 15 drückt. D.h., durch die vorstehend beschriebene Anordnung des Kolbens 20 kann der Ring 16 material- und gewichtsoptimiert hergestellt werden.

Damit der Ring 16 sicher entlang der Wandung 15 des Generatorträgers 12 durch den Kolben 20 verschoben werden kann, sind an dem Generatorträger 12 und/oder der Bodenplatte 13 Führungsmittel vorgesehen, die den zylindrischen Ring 16 entlang der Bewegungsrichtung B führen. Die Bodenplatte 13 weist ein derartiges Führungsmittel auf, und zwar in Form einer die Gasgeneratoraussparung 13c umlaufenden Stufe, entlang der ein der Bodenplatte 13 zugewandter Rand des Ringes 16 gleiten kann.

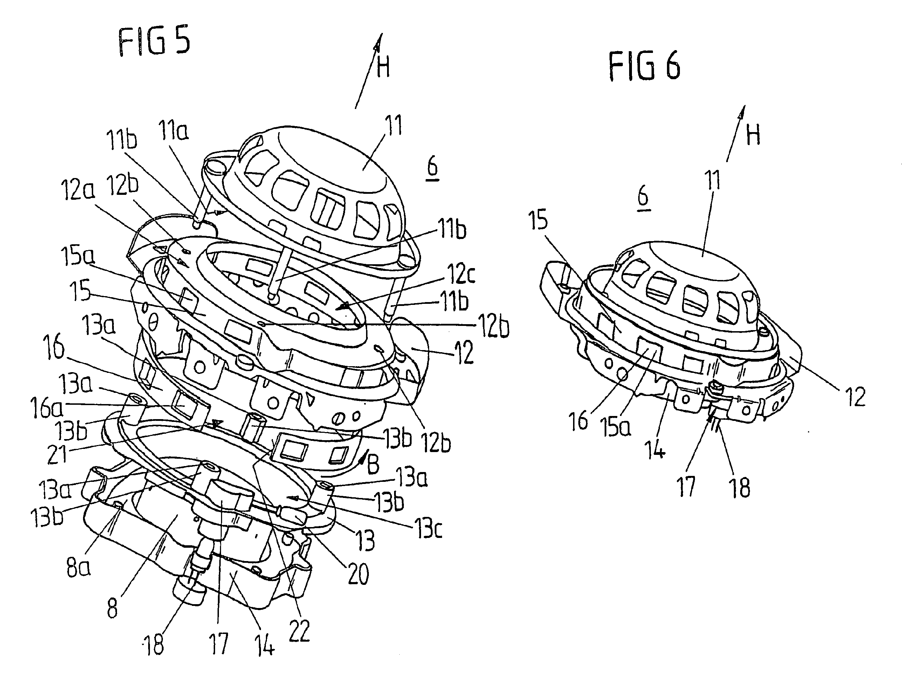

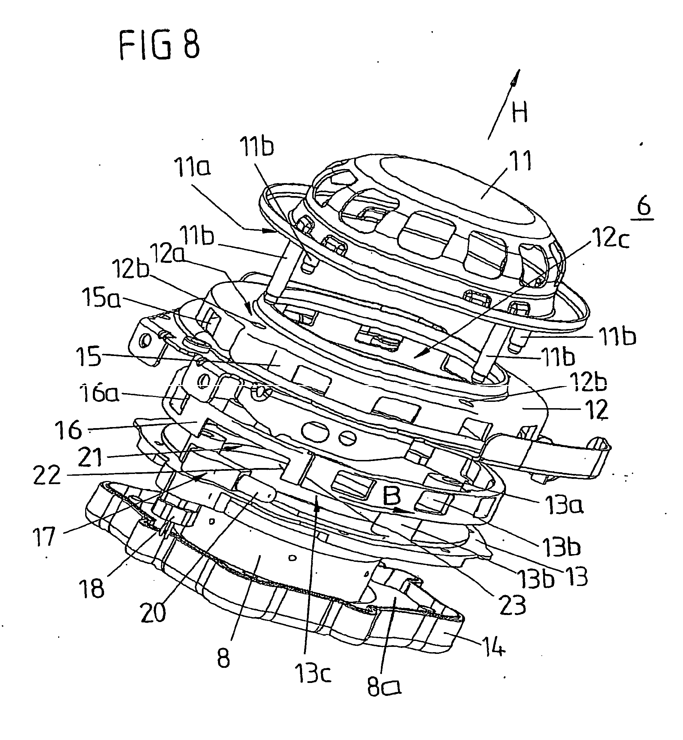

Figur 8 zeigt eine Abwandlung des in der Figur 5 gezeigten Airbagmoduls 6, bei dem im Unterschied zur Figur 5 der Ring 16 entlang der Bewegungsrichtung B nicht durch die Ausnehmung 21 unterbrochen ist. Die Ausnehmung 21 des Ringes 16 ist hier an dem der Bodenplatte 13 zugewandten Rand des Ringes 16 ausgebildet, und zwar derart, dass ebenfalls ein quer zur Bewegungsrichtung B verlaufender Rand 22 der Ausnehmung 21 ausgebildet wird, gegen den der Kolben 20 zum Verschieben des Ringes 16 drücken kann. Allerdings wird bei der in der Figur 8 dargestellten Abwandlung des Airbagmoduls 6 der Ring 16 nicht wie in der Figur 5 durch den Kolben 20 entlang der Bewegungsrichtung B geschoben, sondern durch den gegen den Rand 22 drückenden Kolben 20 gezogen, da in Bewegungsrichtung B vor dem Rand 22 der Ausnehmung 21 des Ringes 16 eine parallel zu dem Rand 22 verlaufende weitere Ausnehmung 23 in Form eines Spaltes ausgebildet ist, die den Ring 16 unterbricht. Hierdurch wird der Ring 16 durch den entlang der Bewegungsrichtung B gegen den Rand 22 drückenden Kolben 20 nicht entlang der Bewegungsrichtung B geschoben, sondern durch den gegen den Rand 22 drückenden Kolben 20 entlang der Bewegungsrichtung B gezogen. Dies ist vorteilhaft, da hierdurch eine durch den Kolben 20 bewirkte Deformation des Ringes 16 effektiv vermindert werden kann.

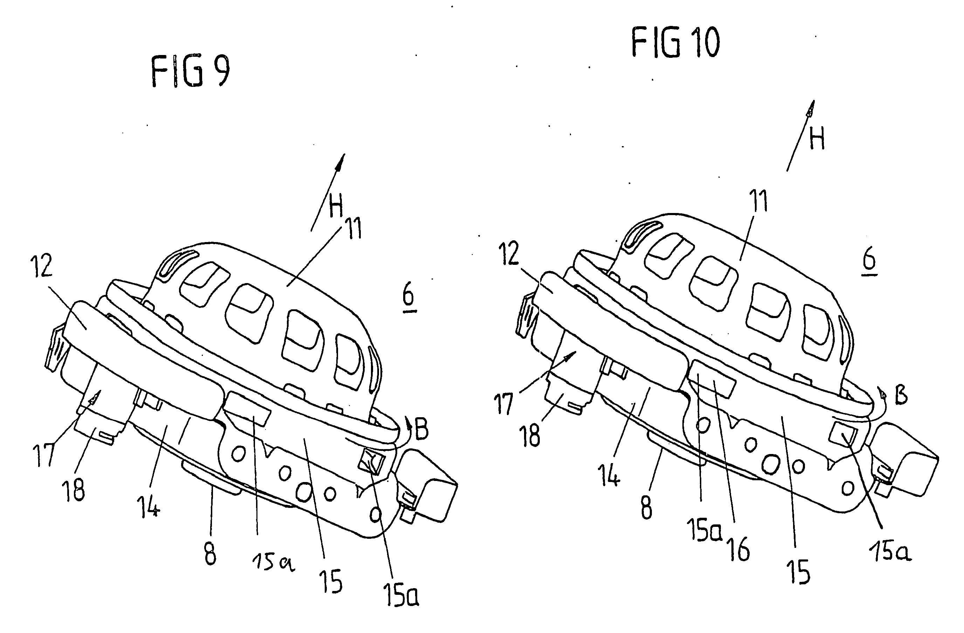

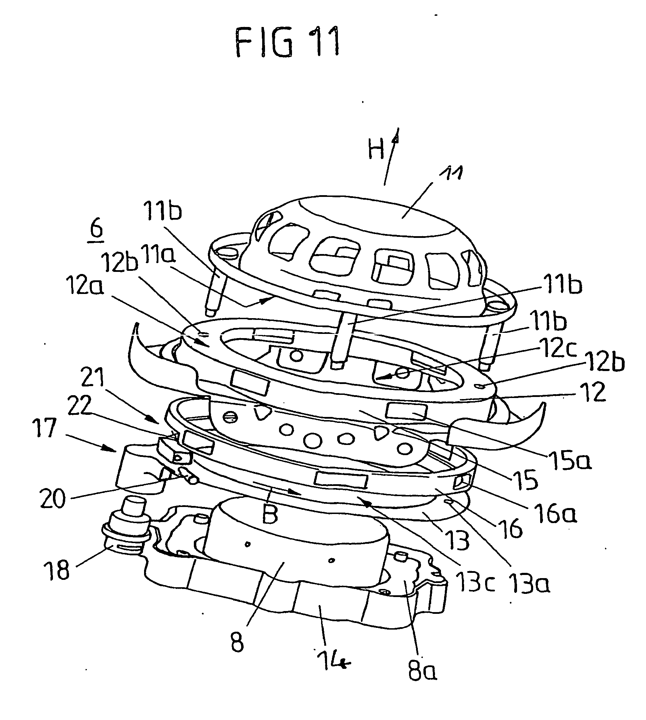

Figur 9 zeigt im Zusammenhang mit Figur 10 und Figur 11 eine weitere Abwandlung des in der Figur 5 bzw. Figur 8 gezeigten Airbagmoduls 6, bei dem im Unterschied zur Figur 5 bzw. Figur 8 eine Ausnehmung 21 an dem Ring 16 vorgesehen ist, die den Ring 16 nicht unterbricht, d.h., der Ring 16 ist in sich geschlossen ausgebildet, so dass der Kolben 20, der zum Bewegen des Ringes 16 gegen den Rand 22 dieser Ausnehmung 21 drückt, den Ring 16 entlang der Bewegungsrichtung B schiebt. Damit der Ring 16 in diesem Fall weniger stark durch den Kolben 20 beim Verschieben gegenüber der Wandung 15 deformiert wird, weist er senkrecht zur Bewegungsrichtung B einen im Wesentlichen U-förmigen Querschnitt auf oder eine vergleichbare Profilierung.

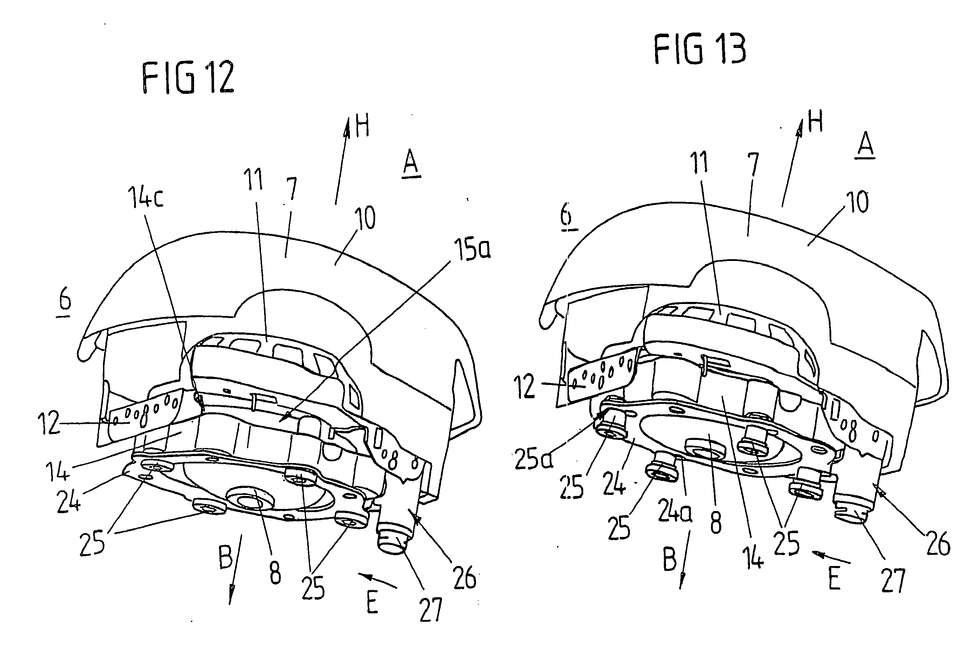

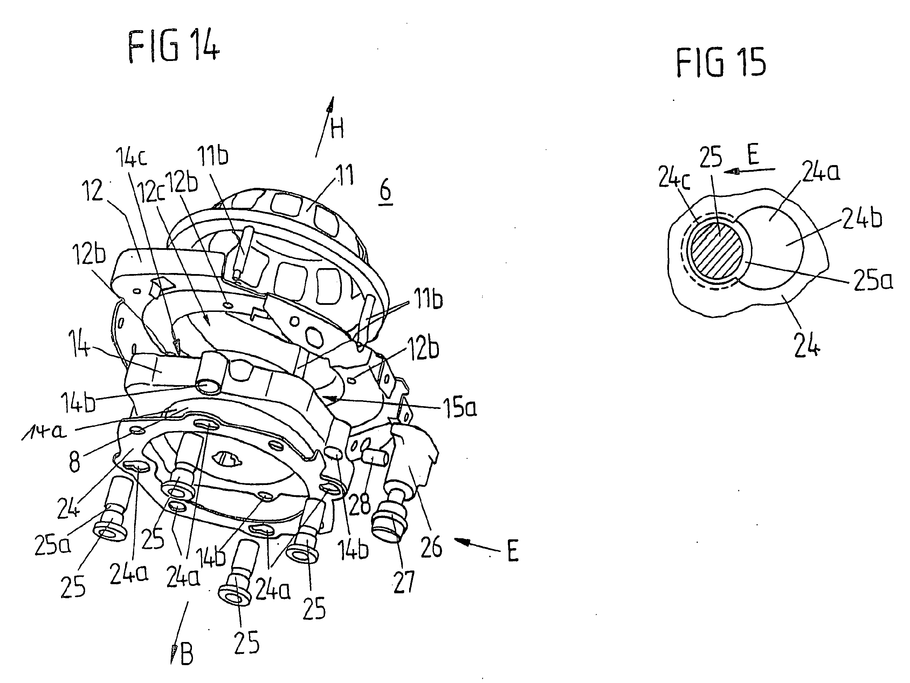

Figur 12 zeigt im Zusammenhang mit Figur 13 und Figur 14 eine alternative Variante eines Airbagmoduls 6, bei dem im Unterschied zur Figur 5, Figur 8 und Figur 11 das bewegbare Element nicht durch einen Ring 16 gebildet ist, sondern durch den Gasgenerator 8 selbst, der entlang der Hauptentfaltungsrichtung H zwischen zwei Positionen verschiebbar ist. Im Gegensatz zu den Figuren 5, 8 und 11 kann hierbei auf eine Bodenplatte 13 verzichtet werden. Die den Gasgenerator 8 umgebende Kammer 9 wird in diesem Fall durch zumindest ein erstes und ein zweites Kammerelement gebildet, nämlich den Generatorträger 12 als erstem Kammerelement, das entlang der Hauptentfaltungsrichtung H dem wannenförmig ausgebildeten Träger 14 als zweitem Kammerelement gegenüber liegt, an dem eine mittige Gasgeneratorausnehmung 14a ausgebildet ist, durch die ein freier Endbereich des Gasgenerators 8 entlang der Hauptentfaltungsrichtung H hindurchragt, wobei der Gasgenerator 8 einen den Gasgenerator 8 umlaufenden und von dem Gasgenerator 8 abstehenden Flansch 8a aufweist, über den der Gasgenerator 8 an einem die Gasgeneratorausnehmung 14a umlaufenden Randbereich gelagert ist, der entlang der Hauptentfaltungsrichtung H einer nicht gezeigten Einblasöffnung 3 des Gassackes 1 des Airbagmoduls 6 gegenüber liegt und dieser zugewandt ist.

Der Träger 14 weist einen umlaufenden Randbereich 14c auf, der dem Generatorträger 12 entlang der Hauptentfaltungsrichtung H zugewandt ist und an diesem zur Ausbildung der den Gasgenerator 8 umgebenden Kammer 9 anliegen kann.

Auf der zentralen Öffnung 12c des Generatorträgers 12 sitzt der kappenförmige Diffusor 11, wobei wie vorstehend beschrieben, zwischen dem Diffusor 11 und dem Generatorträger 12 der Gassack 1 mit seinem die Einblasöffnung 3 umlaufenden Randbereich eingeklemmt ist. Von dem Diffusor 11 stehen, wie vorstehend beschrieben, Befestigungselemente 11 b ab, die durch mit den Befestigungselementen 11 b fluchtende Löcher 12b des Generatorträgers 12 und mit diesen Löchern 12b fluchtenden Löchern 14b des Trägers 14 sowie mit den Löchern 14b des Trägers 14 fluchtenden Langlöchern 24a eines Verriegelungselementes 24 geführt sind und mit entlang der Hauptentfaltungsrichtung H längs erstreckt ausgebildeten Muttern 25 verschraubt sind.

Die Muttern 25 sind derart ausgebildet, dass sie in einem mit den Befestigungsmitteln 11 b verschraubtem Zustand entlang der Hauptentfaltungsrichtung H in die Langlöcher 24a des Verriegelungselementes 24 und die mit den Befestigungselementen 11 b fluchtenden Löcher 14b des Trägers 14 eingeführt sind, so dass der Träger 14 entlang der Hauptentfaltungsrichtung H auf den Muttern 25 entlang der Hauptentfaltungsrichtung H gleiten kann. D.h., die Muttern 25 bilden Führungselemente für den Gasgenerator 8 und den Träger 14 (zweites Kammerelement), der hierdurch durch einen beim Aufblasen des Gassackes 1 wirkenden Druck entlang einer entgegengesetzt zur Hauptentfaltungsrichtung H verlaufenden Bewegungsrichtung B durch die Führungselemente 25 geführt werden kann.

Um den Gasgenerator 8 in seiner anfänglichen Position, in dieser Position ist die erste Abströmöffnung geschlossen, beim Aufblasen des Gassackes 1 zu fixieren, ist das Verriegelungselement 24 vorgesehen, das derart mit den Führungselementen 25 in Eingriff bringbar ist, dass der Gasgenerator 8 mit dem Träger 14 entlang der Bewegungsrichtung B gegen das Verriegelungselement 24 drücken kann (aufgrund des Druckes) und dabei in seiner anfänglichen Position bezüglich der Einblasöffnung 3 gehalten wird, d.h., der über den Flansch 8a des Gasgenerators 8 mit dem Gasgenerator 8 verbundene Träger 14 liegt mit seinem dem Generatorträger 12 zugewandten Randbereich 14c an dem Generatorträger 12 an, so dass entlang der Hauptentfaltungsrichtung H zwischen dem Träger 14 und dem Generatorträger 12 kein Gas bzw. nur vergleichsweise geringfügige Mengen an Gas aus der den Gasgenerator 8 umgebenden Kammer 9 entweichen kann (es ist also nicht notwendig, dass der Randbereich 14c des Trägers 14 abdichtend an dem Generatorträger 12 anliegt).

Mittels einer (weiteren) Bewegungserzeugungsvorrichtung 26, die in einer Druckkammer mittels eines Zünders 27 einen Überdruck bereitstellt, der einen Kolben 28 entlang einer quer zur Bewegungsrichtung B des Gasgenerators 8 orientierten Entriegelungsrichtung E aus der Druckkammer der Bewegungserzeugungsvorrichtung 26 herausdrückt, wird das Verriegelungselement 24 entriegelt.

Der Kolben 28 der Bewegungserzeugungsvorrichtung 26 ist hierzu derart bezüglich des Verriegelungselementes 24 angeordnet, dass dieses linear entlang der Entriegelungsrichtung E durch den Kolben 28 verschoben wird. Hierdurch gerät das Verriegelungselement 24 außer Eingriff mit Einkerbungen 25a der Führungselemente 25, so dass der Gasgenerator 8 infolge des Druckes, der beim Aufblasen des Gassackes 1 wirkt, entlang der Bewegungsrichtung B von der Einblasöffnung 3 des Gassackes 1 beabstandet wird. Hierbei entfernt sich der mit dem Gasgenerator 8 verbundene Träger 12, und zwar dessen Randbereich 14c, von dem Generatorträger 12, so dass zwischen dem Randbereich 14c des Trägers 14 und dem Generatorträger 12 ein den Gasgenerator 8 umlaufender Spalt ausgebildet wird, der die erste Abströmöffnung 15a bildet. Diese Position des Gasgenerators 8 bzw. des Trägers 14 ist in der Figur 12 dargestellt. Demgegenüber zeigt Figur 13 die anfängliche Position des Gasgenerators 8 bzw. des Trägers 14 mit einem an den Generatorträger 12 anliegenden Randbereich 14c des Trägers 14. Dies entspricht einer verschlossenen ersten Abströmöffnung 15a.

Figur 15 zeigt ein Detail des in der Figur 12 bis 14 dargestellten Airbagmoduls 6, und zwar das Prinzip, nach dem das im Wesentlichen ringförmig ausgebildete Verriegelungselement 24, das dem Träger 14 entlang der Hauptentfaltungsrichtung H gegenüber liegt, mit den Führungselementen 25 in Eingriff bringbar ist.

Hierzu weist das Verriegelungselement 24 die Langlöcher 24a auf, die sich entlang der Entriegelungsrichtung E erstrecken, wobei die Langlöcher A sich entlang der Entriegelungsrichtung E aufweiten und dementsprechend jeweils einen schmalen Bereich 24c aufweisen, der entlang der Entriegelungsrichtung E einem aufgeweiteten Bereich 24b eines Langloches 24a gegenüberliegt und mittels einer Einengung von diesem aufgeweiteten Bereich 24b abgeteilt ist.

Die Einkerbungen 25a der Führungselemente 25 sind ringförmig ausgebildet und umlaufen die Führungselemente 25 quer zur Bewegungsrichtung B. Der Außendurchmesser der Einkerbungen 25a der Führungselemente 25 ist gerade so groß, dass die Führungselemente 25 mit ihren Einkerbungen 25a in die schmalen Bereiche 24c der Langlöcher 24a gedrückt werden können und durch die Einengungen zwischen den schmalen Bereichen 24c und den aufgeweiteten Bereichen 24b in den schmalen Bereichen 24c einrasten. In dieser Position können die Führungselemente 25 nun nicht mehr entlang der Bewegungsrichtung B verschoben werden. Für den Fall, dass die erste Abströmöffnung 15a geöffnet werden soll, d.h., der Träger 14 bzw. der Gasgenerator 8 sollen entlang der Bewegungsrichtung B vom Generatorträger 12 wegbewegt werden, wird der Zünder 27 der Bewegungserzeugungsvorrichtung 26 gezündet und der Kolben 28 hierdurch entlang der Entriegelungsrichtung E gegen das Verriegelungselement 24 gedrückt, so dass die schmalen Bereiche 24c der Langlöcher 24a aus den Einkerbungen 25a der Führungselemente 25 gedrückt und die aufgeweiteten Bereiche 24b zu den Führungselementen 25 hin verlagert werden. Somit gerät das Verriegelungselement 24 außer Eingriff mit Einkerbungen 25a der Führungselemente 25, da der Außendurchmesser der Führungselemente 25 beabstandet zu den Einkerbungen 25a kleiner ist als der Durchmesser der aufgeweiteten Bereiche 24b der Langlöcher 24a. D.h., das Verriegelungselement 24 kann nun mit samt dem Träger 14 und dem daran befestigten Gasgenerator 8 entlang der Bewegungsrichtung B auf den Führungselementen 25 gleiten.

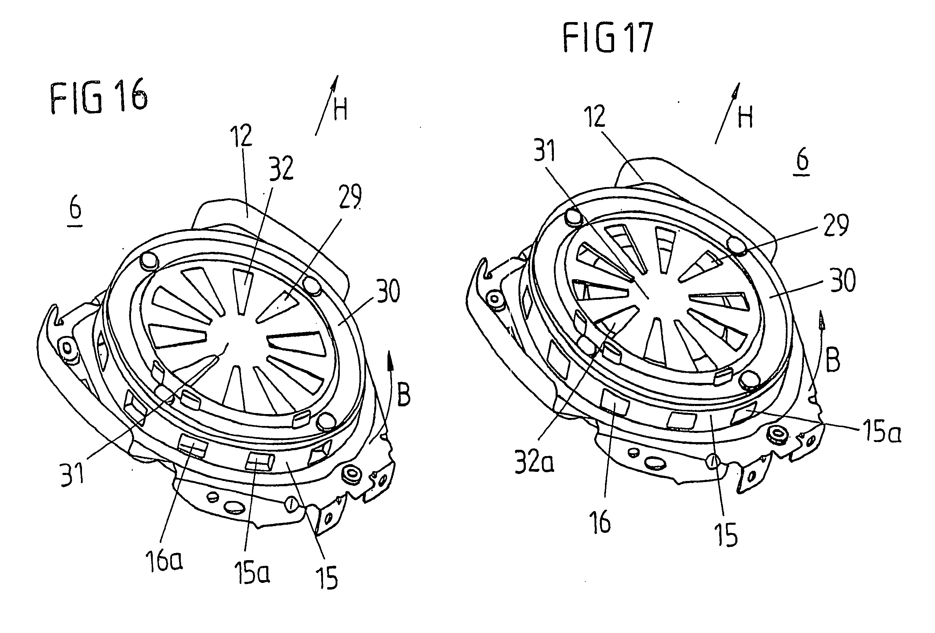

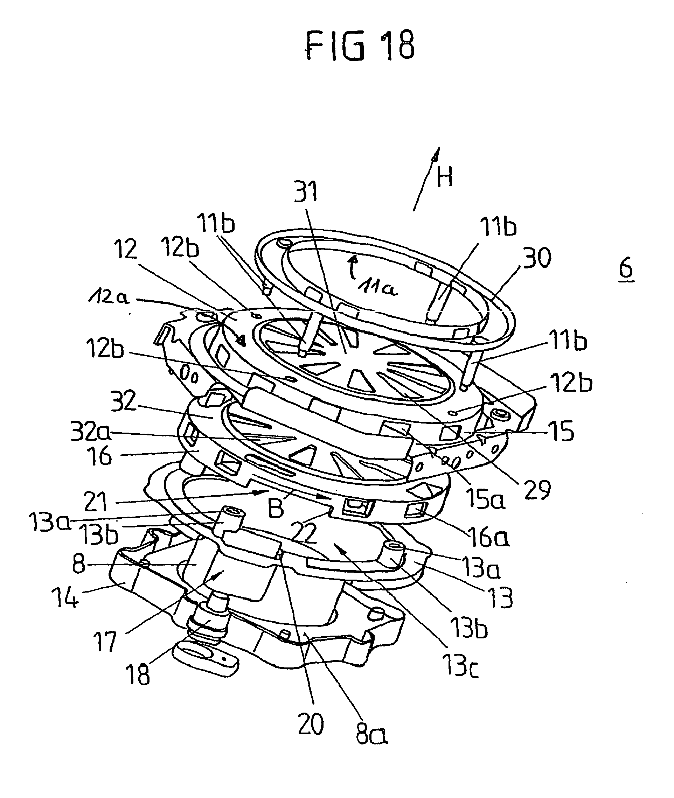

Figur 16 zeigt im Zusammenhang mit Figur 17 und Figur 18 eine perspektivische, ausschnitthafte Ansicht bzw. Explosionsansicht eines Airbagmoduls 6, dessen Generatorträger 12 im Unterschied zu den vorstehend dargestellten Ausführungsformen des Generatorträgers 12 keine permanent geöffnete zentrale Öffnung 12c aufweist, sondern eine Mehrzahl strahlenförmig angeordneter Ausströmöffnungen 29, durch die Gas aus der Kammer 9 des Airbagmoduls 26 durch die Einblasöffnung 3 in den Gassack 1 gelangen kann. Hierzu sind diese Ausströmöffnungen 29 entlang der Hauptentfaltungsrichtung H des Gassackes 1 der Einblasöffnung 3 zugewandt und liegen diesem entlang der Hauptentfaltungsrichtung H gegenüber.

Die Ausströmöffnungen 29 können in der Art ausgebildet sein, dass das Gas, das zum Aufblasen des Gassackes 1 durch diese Ausströmöffnungen 29 hindurch tritt, durch die spezielle Ausgestaltung der Ausströmöffnungen 29 verwirbelt wird, so dass der Diffusor 11 verzichtbar ist. D. h., das in der Figur 16 bis 18 dargestellte Airbagmodul 6 weist lediglich einen Klemmring 30 auf, an dem der dem Generatorträger 12 zugewandte Randbereich 11a ausgebildet ist (siehe Figur 5), der einen die Einblasöffnung 3 umlaufenden Randbereich des Gassackes 1 gegen den Generatorträger 12 drückt und den Gassack 1 somit an dem Generatorträger 12 festlegt.

Von dem Klemmring 30 stehen entlang der Hauptentfaltungsrichtung H die Befestigungselemente 11 b ab, entsprechend den vorstehend beschriebenen Ausführungsformen des Airbagmoduls 6.

Zum Verschließen der Ausströmöffnungen 29 des Generatorträgers 12 ist an dem Ring 16 im Gegensatz zur Figur 2 bis 11 eine Ventilplatte 32 ausgebildet, die eine Mehrzahl von Öffnungen 32a aufweist, die mit den Ausströmöffnungen 29 des Ausströmbereiches 31 des Generatorträgers 12 in Deckung bringbar sind. Hierzu kann die Ventilplatte 32 mit samt dem daran befestigten Ring 16 (Ring 16 und Ventilplatte 32 können einstückig ausgebildet sein) entlang einer quer zur Hauptentfaltungsrichtung H verlaufenden Bewegungsrichtung B gedreht werden, d.h., die Ventilplatte 32 kann um eine senkrecht auf der Ventilplatte 32 stehende Achse, die mit der Hauptentfaltungsrichtung H zusammenfällt, rotiert werden, wobei die Öffnungen 32a der Ventilplatte 32 mit den Ausströmöffnungen 29 des Ausströmbereiches 31 zur Deckung gebracht werden können - die Ausströmöffnungen 29 sind geöffnet - bzw. die Ausströmöffnungen 29 mittels der Ventilplatte 32 vollständig verschließbar sind. Da die Ventilplatte 32 mit dem Ring 16 gekoppelt ist, kann die Ventilplatte 32 über die in den Figuren 2 bis 11 dargestellte Bewegungserzeugungsvorrichtung 17 entlang der Bewegungsrichtung B bewegt werden. Die Ausströmöffnungen 29 sind derart an dem Ausströmbereich 31 des Generatorträgers 12 ausgebildet, dass bei durch die Ventilplatte 32 verschlossenen Ausströmöffnungen 29 die ersten Abströmöffnungen 15a der zylindrischen Wandung 15 des Generatorträgers 12 geöffnet sind und dass die ersten Abströmöffnungen 15a durch den Ring 16 verschlossen sind, wenn die Ausströmöffnungen 29 geöffnet sind, d.h., sich mit den an der Ventilplatte 32 ausgebildeten Öffnungen 32a in Deckung befinden.

Es ist natürlich auch möglich, die vorstehend beschriebenen Ausführungsformen miteinander zu kombinieren. Der Gasgenerator 8 kann beispielsweise gemäß Figur 14 entlang der Bewegungsrichtung B bewegbar ausgebildet sein, wobei zusätzlich die zentrale Öffnung 12c des Generatorträgers 12 durch einen Abströmbereich 31 mit entsprechenden Ausströmöffnungen 29 gemäß der Figur 18 ausgestattet sein kann, so dass die in der Figur 14 dargestellte zentrale Öffnung 12c des Generatorträgers 12 mittels einer Ventilplatte 32 verschließbar ist. Hierzu ist jeweils eine Bewegungserzeugungsvorrichtung gemäß der Figur 7 vorgesehen.

## Patentansprüche

1. Airbagmodul für ein Kraftfahrzeug mit
- einer Abdeckung (7), zur Aufnahme eines Gassackes (1), die einen Außenraum (A) des Airbagmoduls (6) von einem Innenraum (I) des Airbagmoduls (6) trennt,
- einem Gassack (1), der zum Schutz eines Insassen durch eine Einblasöffnung (3) hindurch mit Gas aufblasbar ist,
- einem Gasgenerator (8), mit dem das Gas zum Aufblasen des Gassackes (1) erzeugbar ist, das aus mindestens einer Gasaustrittsöffnung des Gasgenerators (8) austritt und durch die Einblasöffnung (3) in den Gassack (1) gelangt,
- einer den Gasgenerator (8) umgebenden Kammer (9), die eine zylindrische Wandung (15) aufweist,
- einer verschließbaren Ausströmöffnung (29) der Kammer (9), die an einem dem Gassack (1) zugewandten Ausströmbereich (31) der Kammer (9) angeordnet ist und durch die Gas zum Aufblasen des Gassackes (1) in den Gassack (1) gelangen kann,
- einer in der Wandung (15) angeordneten ersten Abströmöffnung (15a), der ein zumindest zwischen zwei unterschiedlichen Positionen bewegbares Element (16) zugeordnet ist, durch dessen Bewegung zwischen den beiden Positionen die erste Abströmöffnung (15a) derart gasleitend mit der Gasaustrittsöffnung des Gasgenerators (8) verbindbar ist, dass das durch die Gasaustrittsöffnung ausströmende Gas zumindest teilweise in den Außenraum (A) geleitet wird,
- wobei das bewegbare Element (16) eine Ventilplatte (32) mit einer Öffnung (32a) aufweist, wobei die Ventilplatte (32), derart verschiebbar an der Wandung (15) der Kammer (9) angeordnet ist, dass die Öffnung (32a) durch ein Verschieben der Ventilplatte (32) entlang des Ausströmbereiches (31) mit der Ausströmöffnung (29) in Deckung bringbar ist,
**dadurch gekennzeichnet, dass**
die Ventilplatte (32) zum in Deckung bringen der Öffnung (32a) mit der Ausströmöffnung (29) um eine senkrecht auf der Ventilplatte (32) stehende Achse rotierbar ist.

2. Airbagmodul nach Anspruch 1, **dadurch gekennzeichnet, dass** der Gassack (1) durch einen öffenbaren Bereich (10) der Abdeckung (7) hindurch in den Außenraum (A) des Airbagmoduls (6) entfaltbar ist.

3. Airbagmodul nach Anspruch 2, **gekennzeichnet durch** eine zweite Abströmöffnung (4) des Gassackes (1), die in einem aufgeblasenen Zustand des Gassackes (1) derart im Innenraum (I) des Airbagmoduls (6) angeordnet ist, dass aus der zweiten Abströmöffnung (4) austretendes Gas **durch** den öffenbaren Bereich (10) der Abdeckung (7) hindurch in den Außenraum (A) gelangt.

4. Airbagmodul nach einem der vorhergehenden Ansprüche, **dadurch gekennzeichnet, dass** die Gasaustrittsöffnung des Gasgenerators (8) derart mit der ersten Abströmöffnung (15a) gasleitend verbindbar ist, dass das durch die Gasaustrittsöffnung ausströmende Gas vollständig in den Außenraum (A) geleitet wird.

5. Airbagmodul nach Anspruch 2 oder einem der Ansprüche 3 bis 4 soweit rückbezogen auf Anspruch 2, **dadurch gekennzeichnet, dass** die erste Abströmöffnung (15a) derart angeordnet ist, dass aus der ersten Abströmöffnung (15a) austretendes Gas in den Innenraum (I) und von dort durch den öffenbaren Bereich (10) hindurch in den Außenraum (A) gelangt.

6. Airbagmodul nach Anspruch 5, **dadurch gekennzeichnet, dass** die erste Abströmöffnung (15a) derart angeordnet ist, dass aus der ersten Abströmöffnung (15a) austretendes Gas direkt in den Innenraum (I) außerhalb des Gassackes (1) und von dort durch den öffenbaren Bereich (10) hindurch in den Außenraum (A) gelangt.

7. Airbagmodul nach einem der vorangegangenen Ansprüche, **dadurch gekennzeichnet, dass** der Gassack (1) zum Ablassen von Gas eine dritte Abströmöffnung (5) aufweist, die bei einem entfalteten Gassack (1) im Außenraum (A) des Airbagmoduls (6) angeordnet ist.

8. Airbagmodul nach Anspruch 7, **dadurch gekennzeichnet, dass** die dritte Abströmöffnung (5) im aufgeblasenen Zustand des Gassackes (1) an einer dem Airbagmodul (6) zugewandten Seite (2) des Gassackes (1) angeordnet ist.

9. Airbagmodul nach Anspruch 7 oder 8, **dadurch gekennzeichnet, dass** der Gassack (1) zum Ablassen von Gas eine weitere dritte Abströmöffnung (5) aufweist, die bei einem entfalteten Gassack (1) im Außenraum (A) des Airbagmoduls (6) angeordnet ist.

10. Airbagmodul nach Anspruch 7 und 9, **dadurch gekennzeichnet, dass** die weitere dritte Abströmöffnung (5) der dritten Abströmöffnung (5) im aufgeblasenen Zustand des Gassackes (1) quer zu einer Hauptentfaltungsrichtung (H) des Gassackes (1) gegenüberliegt.

11. Airbagmodul nach einem der vorangegangenen Ansprüche, **dadurch gekennzeichnet, dass** das bewegbare Element (16) in einer parallel zu einer Hauptentfaltungsrichtung (H) des Gassackes (1) verlaufenden Bewegungsrichtung (B) verschiebbar ist.

12. Airbagmodul nach einem der vorangegangenen Ansprüche, **dadurch gekennzeichnet, dass** das bewegbare Element (16) in einer parallel zur Einblasöffnung (3) verlaufenden Bewegungsrichtung (B) verschiebbar und / oder drehbar ist

13. Airbagmodul nach einem der vorhergehenden Ansprüche, **dadurch gekennzeichnet, dass** das bewegbare Element derart beweglich an der Kammer (9) gelagert ist, dass die erste Abströmöffnung (15a) mit dem beweglichen Element verschließbar ist.

14. Airbagmodul nach einem der vorhergegangenen Ansprüche, **dadurch gekennzeichnet, dass** das bewegbare Element einen zylindrischen Ring (16) mit einer Aussparung (16a) aufweist, wobei der Ring (16) derart verschiebbar an der Wandung (15) der Kammer (9) angeordnet ist, dass die Aussparung (16a) durch ein Verschieben des Ringes (16) entlang der Wandung (15) mit der ersten Abströmöffnung (15a) in Deckung bringbar ist.

15. Airbagmodul nach Anspruch 14, **dadurch gekennzeichnet, dass** der Ring (16) zum Verschieben des Ringes (16) entlang der Bewegungsrichtung (B) eine Ausnehmung (21) mit einem quer zur Bewegungsrichtung (B) orientierten Rand (22) aufweist.

16. Airbagmodul nach einem der Ansprüche 13 bis 15, **dadurch gekennzeichnet, dass** das bewegbare Element (16) mittels einer Bewegungserzeugungsvorrichtung (17) bewegbar ist.

17. Airbagmodul nach Anspruch 16, **dadurch gekennzeichnet, dass** die Bewegungserzeugungsvorrichtung (17) einen Kolben (20) aufweist, der zum Verschieben des Ringes (16) entlang der Bewegungsrichtung (B) gegen den Rand (22) der Ausnehmung (21) drückt.

18. Airbagmodul nach einem der Ansprüche 14 bis 17, **dadurch gekennzeichnet, dass** die Ventilplatte (32) an einem umlaufenden, dem Gassack (1) zugewandten Rand des Ringes (16) festgelegt ist.

19. Airbagmodul nach Anspruch 18, **dadurch gekennzeichnet, dass** die Öffnung (32a) der Ventilplatte (32) derart bezüglich der Aussparung (16a) des Ringes (16) angeordnet ist, dass die Ausströmöffnung (29) durch die Ventilplatte (32) verschlossen ist, wenn die erste Abströmöffnung (15a) offen ist, und dass die Ausströmöffnung (29) offen ist, wenn die erste Abströmöffnung (15a) durch den Ring (16) verschlossen ist.
